# EUROPÄISCHE PATENTSCHRIFT

(11) **EP 4 368 818 B1**
(45) Veröffentlichungstag und Bekanntmachung des Hinweises auf die Patenterteilung: **01.10.2025**
(21) Anmeldenummer: 23186466.1
(22) Anmeldetag: 19.07.2023
(51) Int. Cl.: F01N 3/20

(54) **DOSIERSYSTEM MIT DOSIERPUMPE MIT AUSSCHIEBENDER FEDER**
METERING SYSTEM WITH A METERING PUMP WITH A PUSH-OUT SPRING
SYSTÈME DE DOSAGE AVEC POMPE DE DOSAGE AVEC RESSORT COULISSANT

(30) Priorität: 11.11.2022 DE 102022004198
(43) Veröffentlichungstag der Anmeldung: 15.05.2024
(73) Patentinhaber: Albonair GmbH, 44263 Dortmund (DE)
(72) Erfinder: Dr. Hüthwohl, Georg, 44229 Dortmund (DE)
(74) Vertreter: Patentanwaltskanzlei Methling

(56) Entgegenhaltungen:
- DE-A1- 102007 035 938
- DE-A1- 102011 012 321

## Beschreibung

Die Erfindung betrifft ein Reduktionsmitteldosiersystem zur Einleitung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über eine Saugleitung aus einem Reduktionsmitteltank angesaugt und über zumindest eine Druckleitung gefördert und über zumindest eine Düse in den Abgasstrom des Verbrennungsmotors eingeleitet wird, wobei es sich bei der Förderpumpe um eine Hubkolbenpumpe handelt.

Ferner betrifft die Erfindung ein Verfahren zum Betrieb eines Reduktionsmitteldosiersystems zur Einspritzung eines Reduktionsmittels in den Abgasstrom eines Verbrennungsmotors zur selektiven katalytischen Reduktion mit zumindest einer Förderpumpe, mittels derer Reduktionsmittel aus einem Reduktionsmitteltank über eine Saugleitung angesaugt, über zumindest eine Druckleitung gefördert und über zumindest eine Dosierstelle in den Abgasstrom des Verbrennungsmotors eingeleitet wird.

Derartige Dosiersysteme und Verfahren zum Betrieb solcher Dosiersysteme sind aus der DE 10 2007 035 938 A1 und DE 10 2011 01231 A1 bekannt. Dabei wird das Reduktionsmittel üblicherweise in Form eines Aerosols in den Abgasstrom des Verbrennungsmotors eingeleitet, wobei aufgrund der hohen Abgastemperaturen ein Verdampfen des Aerosols erfolgt.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Die Begriffe Reduktionsmitteldosiersystem bzw. Dosiersystem werden im Sinne der Erfindung synonym verwendet. Die Begriffe Düse und Einspritzdüse werden ebenfalls synonym verwendet.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. Die Aufbereitung unterteilt sich somit in die folgenden beiden Reaktionsschritte:

Thermolyse (NH₂)₂CO → NH₃ + HNCO

Hydrolyse HNCO + H₂O → NH₃ + CO₂

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Um den gewünschten Ablauf dieser Reaktionen zu garantieren, ist die Bereitstellung der benötigten Menge an Reduktionsmittellösung und die Erzeugung eines fein verteilten Aerosols erforderlich.

Bei den bekannten Reduktionsmitteldosiersystemen zur Einspritzung eines Reduktionsmittels in den Abgasstrom eines Verbrennungsmotors zur selektiven katalytischen Reduktion kann dabei zwischen Systemen, bei denen die Dosiermenge über die Förderpumpe definiert wird, und Systemen, bei denen ein Vordruck erzeugt wird und die Dosiermenge über ein Dosierventil definiert wird, unterschieden werden.

Problematisch bei beiden Systemen ist eine gleichmäßige und kontinuierliche Bereitstellung der benötigten Fördermengen und Erzeugung des gewünschten feinverteilten Aerosols.

Die Aufgabe der Erfindung ist es daher, ein Reduktionsmitteldosiersystem zur Einleitung eines Reduktionsmittels in den Abgasstrom eines Verbrennungsmotors zur selektiven katalytischen Reduktion derart weiterzubilden, dass die Bereitstellung der benötigten Fördermengen unter einem gleichmäßigen Druck ermöglicht wird.

Diese Aufgabe wird erfindungsgemäß durch ein Reduktionsmitteldosiersystem gemäß Anspruch 1 und ein Verfahren zum Betrieb eines Reduktionsmitteldosiersystems gemäß Anspruch 10 gelöst. Vorteilhafte Weiterbildungen der Erfindung sind in den abhängigen Ansprüchen angegeben. Im Sinne der Erfindung werden die Begriffe Reduktionsmitteldosiersystem und Dosiersystem synonym benutzt.

Besonders vorteilhaft bei dem Reduktionsmitteldosiersystem zur Einspritzung eines Reduktionsmittels in den Abgasstrom eines Verbrennungsmotors, insbesondere eines Fahrzeuges, zur selektiven katalytischen Reduktion mit zumindest einer Förderpumpe, mittels derer Reduktionsmittel aus einem Reduktionsmitteltank über eine Saugleitung aus einem Reduktionsmitteltank angesaugt und über zumindest eine Druckleitung zu zumindest einer Düse zur Einleitung in den Abgasstrom des Verbrennungsmotors gefördert wird, ist es, dass es sich bei der Förderpumpe um eine Hubkolbenpumpe handelt, wobei der Förderhub und der Saughub zeitgleich durch einen Hub des Kolbens bis zum oberen Totpunkt mittels einer Feder ausgeführt werden, wobei der Kolben nach Beendigung des Hubs mittels einer schaltbaren Spule elektromagnetisch gegen die Federkraft der Feder bis zum unteren Totpunkt zurückgezogen wird und die Feder gespannt wird.

Erfindungsgemäß wird die Förderpumpe so aufgebaut, dass der Förderhub und der Saughub gleichzeitig durch eine Feder ausgeführt wird. Die Förderung mit der Feder ermöglicht einen gleichförmigen Druck während der Injektionsphase unabhängig von Leitungsvariationen und gegebenenfalls vorliegenden Teilverblockungen in der Dosierleitung und der Düse.

Ist der Dosiervorgang abgeschlossen, so wird der Kolben und damit gleichzeitig die Feder durch die Spule elektromagnetisch zurückgezogen und hierdurch die Feder gespannt und bei diesem Vorgang gleichzeitig das Reduktionsmittel innerhalb der Förderpumpe umgefördert. Beim Förderhub durch die Feder wird wiederum ein sehr gleichmäßiger und weitgehend kontinuierlicher Einspritzvorgang ohne Überlastung der Düse durchgeführt.

Vorzugsweise mündet die Druckleitung in eine Sprühdüse, über die eine Einleitung des Reduktionsmittels in den Abgasstrom des Verbrennungsmotors erfolgen kann. Sprühdüsen benötigen für eine gute Sprayqualität einen möglichst kontinuierlichen Förderstrom. Dies wird durch die erfindungsgemäße Förderpumpe und die Förderung mittels der Feder gewährleistet.

Bevorzugt mündet die Druckleitung in eine Sprühdüse, wobei die Sprühdüse ein Rückschlagventil aufweist. Durch die Anordnung eines Rückschlagventils kann ein Nachtropfen vermieden werden.

Vorzugsweise mündet die Druckleitung in eine Sprühdüse, wobei die Sprühdüse durch eine Dralldüse gebildet ist. Durch die Verwendung einer Dralldüse wird eine sehr gute Sprayqualität bei der Eindüsung des Reduktionsmittels in den Abgasstrom des Verbrennungsmotors erzielt.

Bevorzugt ist die Druckleitung zwischen der Förderpumpe und der Düse drucksteif ausgeführt. Vorteilhaft ist dabei, dass hierdurch der für die Düse erforderliche Durchfluss schnell erreicht wird und das Spray in einer guten Qualität ausgebildet wird. Auch muss der Sprayvorgang schnell abgeschlossen werden, um beim Ende der Einspritzung keine nachlassende Sprayqualität zu haben. Dies wird durch eine drucksteife Druckleitung zwischen der Förderpumpe und der Düse gewährleistet.

Vorzugsweise weist die Druckleitung zwischen der Förderpumpe und der Düse zumindest ein Volumenausdehnungselement auf.

Bevorzugt ist die Druckleitung zwischen der Förderpumpe und der Düse bis zu einem definierten Grenzdruck drucksteif ausgeführt und weist zumindest ein Volumenausdehnungselement auf, welches oberhalb des Grenzdruckes ein zusätzliches Volumen zum Druckausgleich freigibt.

Das Reduktionsmittel ist üblicherweise eine Harnstoff-Wasserlösung mit 32,5 % Harnstoffanteil. Diese Harnstoff-Wasserlösung friert bei -11°C ein und hat dann eine Volumenausdehnung von ca. 10%. Um das Reduktionsmitteldosiersystem frostfest zu gestalten, sind ein oder mehrere Volumenausdehungselemente in der Druckleitung angeordnet, die in dem Druckbereich der Dosierung bis zu einem definierten Grenzdruck von beispielsweise 10 bar drucksteif sind und oberhalb dieses Grenzdrucks von beispielsweise 10 bar bei Frost zusätzliches Volumen zum Druckausgleich freigeben.

Vorzugsweise ist ein Steuergerät angeordnet, mittels dessen eine Ansteuerung der Förderpumpe erfolgt.

Besonders bevorzugt ist ein Steuergerät angeordnet, mittels dessen eine Überwachung der Förderpumpe erfolgt, insbesondere kann eine Überwachung der Förderpumpe mittels einer Auswertung der Kolbenbewegung erfolgen.

Die Überwachung der Dosierung kann bei dieser Anordnung über die Pumpe erfolgen, indem der Kolbenhub erfasst und mittels des Steuergerätes ausgewertet wird. Anhand der Auswertung der Kolbenbewegung können Verstopfungen und Leitungsbrüche sicher erkannt werden.

Besonders vorteilhaft bei dem Verfahren zum Betrieb eines Reduktionsmitteldosiersystems zur Einspritzung eines Reduktionsmittels in den Abgasstrom eines Verbrennungsmotors, insbesondere eines Fahrzeuges, zur selektiven katalytischen Reduktion mit zumindest einer Förderpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird, ist es, dass als Förderpumpe eine Hubkolbenpumpe eingesetzt wird, wobei der Förderhub und der Saughub zeitgleich durch einen Hub des Kolbens bis zum oberen Totpunkt mittels einer Feder ausgeführt werden, wobei der Kolben nach Beendigung des Hubs mittels einer schaltbaren Spule elektromagnetisch gegen die Federkraft der Feder bis zum unteren Totpunkt zurückgezogen wird und die Feder gespannt wird.

Bevorzugt erfolgt dabei die Einleitung des Reduktionsmittels in den Abgasstrom über eine Dralldüse. Hierdurch wird wie oben erläutert eine besonders gute Sprayqualität bereitgestellt.

Vorzugsweise erfolgt eine Ansteuerung der Förderpumpe mittels eines Steuergerätes. Mittels dieses Steuergerätes kann eine exakte Ansteuerung der Förderpumpe unter Berücksichtigung weiterer Einflussparameter wie beispielsweise Abgasmassenstrom, Abgastemperatur, etc. erfolgen.

Besonders bevorzugt erfolgt eine Überwachung der Förderpumpe mittels eines Steuergerätes, insbesondere kann eine Überwachung der Förderpumpe mittels einer Auswertung der Kolbenbewegung erfolgen. Die Überwachung der Dosierung kann bei dieser Anordnung über die Pumpe erfolgen, indem der Kolbenhub erfasst und mittels des Steuergerätes ausgewertet wird. Anhand der Auswertung der Kolbenbewegung können Verstopfungen und Leitungsbrüche sicher erkannt werden.

Ein Ausführungsbeispiel der Erfindung ist in den Figuren dargestellt und wird nachfolgend erläutert. Es zeigen:
- Fig. 1: Eine schematische Darstellung eines Reduktionsmitteldosiersystems;
- Fig. 2: einen Schnitt der Förderpumpe des Reduktionsmitteldosiersystems nach Figur 1.

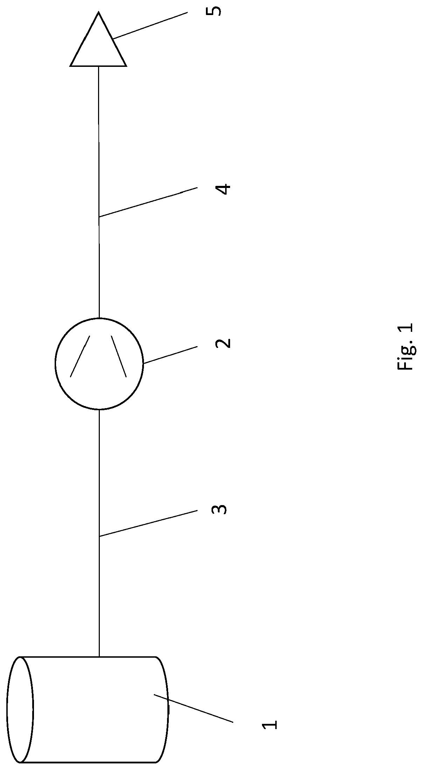

Figur 1 zeigt eine schematische Darstellung eines Reduktionsmitteldosiersystems zur Einspritzung eines Reduktionsmittels in den Abgasstrom eines nicht dargestellten Verbrennungsmotors eines Fahrzeuges zur selektiven katalytischen Reduktion mit einer Förderpumpe 2, mittels derer Reduktionsmittel aus einem Reduktionsmitteltank 1 über eine Saugleitung 3 angesaugt und über eine Druckleitung 4 zu einer Düse 5 zur Einleitung in den Abgasstrom des Verbrennungsmotors gefördert wird. Das Reduktionsmitteldosiersystem wird bei diesem Ausführungsbeispiel somit durch die Förderpumpe 2, die Saugleitung 3 und die Druckleitung 4 sowie die Düse 5 gebildet. In einer nicht dargestellten weiteren Ausführungsform ist der Tank 1 ebenfalls integraler Bestandteil des Reduktionsmitteldosiersystems.

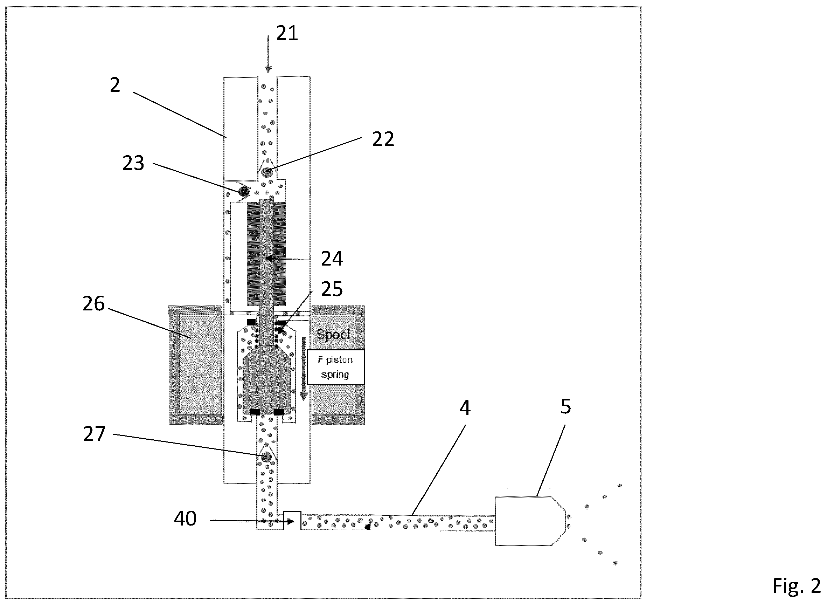

Die Förderpumpe 2 ist in Figur 2 in einer Schnittdarstellung dargestellt. Die in Figur 2 nicht dargestellte Saugleitung mündet in den Reduktionsmitteleinlass 21 der Förderpumpe 2. Das Reduktionsmittel wird in der Förderpumpe 2 über das geöffnete Ansaugventil 22 angesaugt. Das Überströmventil 23 ist während eines Förderhubs geschlossen.

Zur Ausführung des gleichzeitigen Saughubs und Förderhubs des Pumpenkolbens 24 wird der Pumpenkolben 24 von der Feder 25 in Richtung auf den oberen Totpunkt des Pumpenkolbens 24 verschoben. Aufgrund der Federkraft der Feder 25 liegt stets ein gleichmäßiger Druck während des Förderhubs an. Die Förderung des Reduktionsmittels erfolgt über das geöffnete Auslassventil 27 über die Druckleitung 4 zur Dralldüse 5. Über die Dralldüse 5 erfolgt die Eindüsung des Reduktionsmittels in den in der Figur nicht dargestellten Abgasstrom eines Verbrennungsmotors.

Nach Erreichen des oberen Totpunktes des Pumpenkolbens 24 und der Beendigung des Förderhubs wird der Pumpenkolben magnetisch mittels der Spule 26 zum unteren Totpunkt zurückgezogen und hierdurch die Feder 25 gespannt. Dabei erfolgt eine Umförderung des während des zuvor gleichzeitig ausgeführten Saughubs und Förderhubs angesaugten Reduktionsmittels innerhalb der Förderpumpe 2. Nach Abschalten der Spule 26 erfolgt aufgrund der Federkraft der gespannten Feder 25 der nächste Saughub und Förderhub.

In die Druckleitung 4 ist ein Druckentlastungsmodul 40 mit einem Öffnungsdruck > 10 bar integriert, um Frostschäden zu vermeiden. Bei einer Unterschreitung der Schmelztemperatur des geförderten Reduktionsmittels, die bei dem üblicherweise verwendeten Reduktionsmittel bei -11°C liegt, gefriert das Reduktionsmittel und dehnt sich um bis zu 10% aus. Zur Vermeidung von Frostschäden dient somit das Druckentlastungsmodul 40 in der Druckleitung 4, welches bei Überschreiten des Grenzdrucks von 10 bar ein zusätzliches Volumen freigibt.

Es hat sich überraschend gezeigt, dass mit dem Ausschieben über die Feder 25 der Förderpumpe 2 ein sehr gutes und gleichmäßiges Spray erzeugt wird. Während des Förderhubs liegt ein nahezu kontanter Druck vor, der sich mit einer Impulsdosierung mittels einer Magnetkolbenpumpe nicht erreichen lässt. Dralldüsen wie die hier verwendete Dralldüse 5 werden üblicherweise mit einem konstanten Vordruck betrieben. Bei pulsierender Förderung ist die Spraybildung im Allgemeinen problematisch, da die Düse schnell außerhalb ihres Betriebsbereiches kommt. Das Ausschieben über die Feder 25 bietet demgegenüber den Vorteil einer Förderung mit konstanter Kraft und damit einhergehend mit einem konstanten Druck auf der Druckseite der Förderpumpe 2. Hierdurch ist eine optimale Spraybildung gewährleistet.

## Patentansprüche

1. Reduktionsmitteldosiersystem zur Einspritzung eines Reduktionsmittels in den Abgasstrom eines Verbrennungsmotors, insbesondere eines Fahrzeuges, zur selektiven katalytischen Reduktion mit zumindest einer Förderpumpe (2), mittels derer Reduktionsmittel aus einem Reduktionsmitteltank (1) über eine Saugleitung (3) angesaugt und über zumindest eine Druckleitung (4) zu zumindest einer Düse (5) zur Einleitung in den Abgasstrom des Verbrennungsmotors gefördert wird, wobei es sich bei der Förderpumpe (2) um eine Hubkolbenpumpe handelt, **dadurch gekennzeichnet, dass** der Förderhub und der Saughub zeitgleich durch einen Hub des Kolbens (24) bis zum oberen Totpunkt mittels einer Feder (25) ausgeführt werden, wobei der Kolben (24) nach Beendigung des Hubs mittels einer schaltbaren Spule (26) elektromagnetisch gegen die Federkraft der Feder (25) bis zum unteren Totpunkt zurückgezogen wird und die Feder (25) gespannt wird und bei diesem Vorgang gleichzeitig das Reduktionsmittel innerhalb der Förderpumpe umgefördert wird.

2. Reduktionsmitteldosiersystem nach Anspruch 1, **dadurch gekennzeichnet, dass** die Druckleitung (4) in eine Sprühdüse (5) mündet, über die eine Einleitung des Reduktionsmittels in den Abgasstrom des Verbrennungsmotors erfolgen kann.

3. Reduktionsmitteldosiersystem nach Anspruch 1 oder 2, **dadurch gekennzeichnet, dass** die Druckleitung (4) in eine Sprühdüse (5) mündet, wobei die Sprühdüse (5) ein Rückschlagventil aufweist.

4. Reduktionsmitteldosiersystem nach einem der vorherigen Ansprüche, **dadurch gekennzeichnet, dass** die Druckleitung (4) in eine Sprühdüse (5) mündet, wobei die Sprühdüse (5) durch eine Dralldüse gebildet ist.

5. Reduktionsmitteldosiersystem nach einem der vorherigen Ansprüche, **dadurch gekennzeichnet, dass** die Druckleitung (4) zwischen der Förderpumpe (2) und der Düse (5) drucksteif ausgeführt ist.

6. Reduktionsmitteldosiersystem nach einem der vorherigen Ansprüche, **dadurch gekennzeichnet, dass** die Druckleitung (4) zwischen der Förderpumpe (2) und der Düse (5) zumindest ein Volumenausdehnungselement (40) aufweist.

7. Reduktionsmitteldosiersystem nach einem der vorherigen Ansprüche, **dadurch gekennzeichnet, dass** die Druckleitung (4) zwischen der Förderpumpe (2) und der Düse (5) bis zu einem definierten Grenzdruck drucksteif ausgeführt ist und zumindest ein Volumenausdehnungselement (40) aufweist, welches oberhalb des Grenzdruckes ein zusätzliches Volumen zum Druckausgleich freigibt.

8. Reduktionsmitteldosiersystem nach einem der vorherigen Ansprüche, **dadurch gekennzeichnet, dass** ein Steuergerät angeordnet ist, mittels dessen eine Ansteuerung der Förderpumpe (2) erfolgt.

9. Reduktionsmitteldosiersystem nach einem der vorherigen Ansprüche, **dadurch gekennzeichnet, dass** ein Steuergerät angeordnet ist, mittels dessen eine Überwachung der Förderpumpe (2) erfolgt, insbesondere dass eine Überwachung der Förderpumpe (2) mittels einer Auswertung der Kolbenbewegung erfolgt.

10. Verfahren zum Betrieb eines Reduktionsmitteldosiersystems zur Einspritzung eines Reduktionsmittels in den Abgasstrom eines Verbrennungsmotors, insbesondere eines Fahrzeuges, zur selektiven katalytischen Reduktion mit zumindest einer Förderpumpe (2), mittels derer Reduktionsmittel aus einem Reduktionsmitteltank (1) über eine Saugleitung (3) aus dem Tank angesaugt, über zumindest eine Druckleitung (4) gefördert und über zumindest eine Düse (5) in den Abgasstrom des Verbrennungsmotors eingeleitet wird, wobei als Förderpumpe (2) eine Hubkolbenpumpe eingesetzt wird, **dadurch gekennzeichnet, dass** der Förderhub und der Saughub zeitgleich durch einen Hub des Kolbens (24) bis zum oberen Totpunkt mittels einer Feder (25) ausgeführt werden, wobei der Kolben (24) nach Beendigung des Hubs mittels einer schaltbaren Spule (26) elektromagnetisch gegen die Federkraft der Feder (25) bis zum unteren Totpunkt zurückgezogen wird und die Feder (25) gespannt wird und bei diesem Vorgang gleichzeitig das Reduktionsmittel innerhalb der Förderpumpe umgefördert wird.

11. Verfahren nach Anspruch 10, **dadurch gekennzeichnet, dass** die Einleitung des Reduktionsmittels in den Abgasstrom über eine Dralldüse (5) erfolgt.

12. Verfahren nach Anspruch 10 oder 11, **dadurch gekennzeichnet, dass** eine Ansteuerung der Förderpumpe (2) mittels eines Steuergerätes erfolgt.

13. Verfahren nach einem der Ansprüche 10 bis 12, **dadurch gekennzeichnet, dass** eine Überwachung der Förderpumpe (2) mittels eines Steuergerätes erfolgt, insbesondere dass eine Überwachung der Förderpumpe (2) mittels einer Auswertung der Kolbenbewegung erfolgt.

## Claims

1. Reducing agent metering system for injecting a reducing agent into the exhaust gas flow of an internal combustion engine, in particular of a vehicle, for selective catalytic reduction, with at least one feed pump (2), by means of which reducing agent is suctioned from a reducing agent tank (1) via a suction line (3) and is fed via at least one pressure line (4) to at least one nozzle (5) for introduction into the exhaust gas flow of the internal combustion engine, wherein the feed pump (2) is a reciprocating piston pump, **characterized in that** the delivery stroke and the suction stroke are executed simultaneously by a stroke of the piston (24) to top dead center by means of a spring (25), wherein the piston (24) is retracted electromagnetically against the spring force of the spring (25) to the bottom dead center after completion of the stroke by means of a switchable coil (26) and the spring (25) is tensioned and the reducing agent is simultaneously circulated within the delivery pump during this process.

2. Reducing agent metering system according to claim 1, **characterized in that** the pressure line (4) opens into a spray nozzle (5), via which the reducing agent can be introduced into the exhaust gas flow of the internal combustion engine.

3. Reducing agent metering system according to claim 1 or claim 2, **characterized in that** the pressure line (4) opens into a spray nozzle (5), wherein the spray nozzle (5) has a non-return valve.

4. Reducing agent metering system according to any one of the previous claims, **characterized in that** the pressure line (4) opens into a spray nozzle (5), wherein the spray nozzle (5) is formed by a swirl nozzle.

5. Reducing agent metering system according to any one of the preceding claims, **characterized in that** the pressure line (4) between the feed pump (2) and the nozzle (5) is configured to be pressure-resistant.

6. Reducing agent metering system according to any one of the preceding claims, **characterized in that** the pressure line (4) between the feed pump (2) and the nozzle (5) has at least one volume expansion element (40).

7. Reducing agent metering system according to any one of the preceding claims, **characterized in that** the pressure line (4) between the feed pump (2) and the nozzle (5) is configured to be pressure-resistant up to a defined limit pressure and has at least one volume expansion element (40) which releases an additional volume for pressure equalization above the limit pressure.

8. Reducing agent metering system according to any one of the preceding claims, **characterized in that** a control unit is arranged by means of which the feed pump (2) is controlled.

9. Reducing agent metering system according to any one of the preceding claims, **characterized in that** a control unit is arranged, by means of which the feed pump (2) is monitored, in particular **in that** the feed pump (2) is monitored by means of an evaluation of the piston movement.

10. Method for operating a reducing agent metering system for injecting a reducing agent into the exhaust gas flow of an internal combustion engine, in particular a vehicle, for selective catalytic reduction with at least one feed pump (2), by means of which reducing agent is suctioned out of a reducing agent tank (1) via a suction line (3) from the tank, conveyed via at least one pressure line (4) and introduced into the exhaust gas flow of the internal combustion engine via at least one nozzle (5), wherein a reciprocating piston pump is used as the feed pump (2), **characterized in that** the feed stroke and the suction stroke are executed simultaneously by a stroke of the piston (24) to top dead center by means of a spring (25), wherein the piston (24) is retracted electromagnetically by means of a switchable coil (26) against the spring force of the spring (25) to bottom dead center after completion of the stroke and the spring (25) is tensioned and the reducing agent is simultaneously circulated within the feed pump during this process.

11. Method according to claim 10, **characterized in that** the reducing agent is introduced into the exhaust gas flow via a swirl nozzle (5).

12. Method according to claim 10 or 11, **characterized in that** the feed pump (2) is controlled by means of a control unit.

13. Method according to any one of claims 10 to 12, **characterized in that** the feed pump (2) is monitored by means of a control unit, in particular **in that** the feed pump (2) is monitored by means of an evaluation of the piston movement.

## Revendications

1. Système de dosage d'agent de réduction pour l'injection d'un agent de réduction dans le courant de gaz d'échappement d'un moteur à combustion interne, en particulier d'un véhicule, pour la réduction catalytique sélective avec au moins une pompe d'alimentation (2), au moyen de laquelle un agent de réduction est aspiré d'un réservoir d'agent de réduction (1) par le biais d'une conduite d'aspiration (3) et refoulé par le biais d'au moins une conduite de refoulement (4) vers au moins une buse (5) pour l'introduction dans le courant de gaz d'échappement du moteur à combustion interne, dans lequel il s'agit pour la pompe d'alimentation (2) d'une pompe à piston alternatif, **caractérisé en ce que** la course de refoulement et la course d'aspiration sont exécutées en même temps par une course du piston (24) jusqu'au point mort haut au moyen d'un ressort (25), dans lequel le piston (24) est retiré de manière électromagnétique à la fin de la course au moyen d'une bobine (26) commutable contre la force du ressort (25) jusqu'au point mort bas et le ressort (25) est tendu et l'agent de réduction est transporté simultanément lors de ce processus à l'intérieur de la pompe d'alimentation.

2. Système de dosage d'agent de réduction selon la revendication 1, **caractérisé en ce que** la conduite de refoulement (4) débouche dans une buse de pulvérisation (5), par le biais de laquelle une introduction de l'agent de réduction dans le courant de gaz d'échappement du moteur à combustion interne peut être effectuée.

3. Système de dosage d'agent de réduction selon la revendication 1 ou 2, **caractérisé en ce que** la conduite de refoulement (4) débouche dans une buse de pulvérisation (5), dans lequel la buse de pulvérisation (5) présente un clapet antiretour.

4. Système de dosage d'agent de réduction selon l'une quelconque des revendications précédentes, **caractérisé en ce que** la conduite de refoulement (4) débouche dans une buse de pulvérisation (5), dans lequel la buse de pulvérisation (5) présente une buse de torsion.

5. Système de dosage d'agent de réduction selon l'une quelconque des revendications précédentes, **caractérisé en ce que** la conduite de refoulement (4) est formée de manière résistante à la pression entre la pompe d'alimentation (2) et la buse (5).

6. Système de dosage d'agent de réduction selon l'une quelconque des revendications précédentes, **caractérisé en ce que** la conduite de refoulement (4) présente entre la pompe d'alimentation (2) et la buse (5) au moins un élément d'expansion de volume (40).

7. Système de dosage d'agent de réduction selon l'une quelconque des revendications précédentes, **caractérisé en ce que** la conduite de refoulement (4) est formée de manière résistante à la pression entre la pompe d'alimentation (2) et la buse (5) jusqu'à une pression limite définie et présente au moins un élément d'expansion de volume (40) qui libère un volume supplémentaire pour la compensation de pression au-dessus de la pression limite.

8. Système de dosage d'agent de réduction selon l'une quelconque des revendications précédentes, **caractérisé en ce qu'**un appareil de commande est agencé, au moyen duquel une commande de la pompe d'alimentation (2) est effectuée.

9. Système de dosage d'agent de réduction selon l'une quelconque des revendications précédentes, **caractérisé en ce qu'**un appareil de commande est agencé, au moyen duquel une surveillance de la pompe d'alimentation (2) est effectuée, en particulier qu'une surveillance de la pompe d'alimentation (2) est effectuée au moyen d'une évaluation du mouvement de piston.

10. Procédé de fonctionnement d'un système de dosage d'agent de réduction pour l'injection d'un agent de réduction dans le courant de gaz d'échappement d'un moteur à combustion interne, en particulier d'un véhicule, pour la réduction catalytique sélective avec au moins une pompe d'alimentation (2), au moyen de laquelle un agent de réduction est aspiré d'un réservoir d'agent de réduction (1) par le biais d'une conduite d'aspiration (3), refoulé par le biais d'au moins une conduite de refoulement (4) et introduit par le biais d'au moins une buse (5) dans le courant de gaz d'échappement du moteur à combustion interne, dans lequel une pompe à piston alternatif est utilisée comme pompe d'alimentation (2), **caractérisé en ce que** la course de refoulement et la course d'aspiration sont exécutées en même temps par une course du piston (24) jusqu'au point mort haut au moyen d'un ressort (25), dans lequel le piston (24) est retiré de manière électromagnétique à la fin de la course au moyen d'une bobine (26) commutable contre la force du ressort (25) jusqu'au point mort bas et le ressort (25) est tendu et l'agent de réduction est transporté simultanément lors de ce processus à l'intérieur de la pompe d'alimentation.

11. Procédé selon la revendication 10, **caractérisé en ce que** l'introduction de l'agent de réduction dans le courant de gaz d'échappement est effectuée par le biais d'une buse de torsion (5).

12. Procédé selon la revendication 10 ou 11, **caractérisé en ce qu'**une commande de la pompe d'alimentation (2) est effectuée au moyen d'un appareil de commande.

13. Procédé selon l'une quelconque des revendications 10 à 12, **caractérisé en ce qu'**une surveillance de la pompe d'alimentation (2) est effectuée au moyen d'un appareil de commande, en particulier qu'une surveillance de la pompe d'alimentation (2) est effectuée au moyen d'une évaluation du mouvement de piston.
